# EUROPÄISCHE PATENTSCHRIFT

(11) **EP 3 645 597 B1**
(45) Veröffentlichungstag und Bekanntmachung des Hinweises auf die Patenterteilung: **14.04.2021**
(21) Anmeldenummer: 18733869.4
(22) Anmeldetag: 26.06.2018
(51) Int. Cl.: C08G 18/66, C08G 18/76, C08G 18/08, C08G 18/22, C08G 18/24, C08G 18/42

(54) **THERMOPLASTISCHES POLYURETHAN**
THERMOPLASTIC POLYURETHANE
POLYURÉTHANE THERMOPLASTIQUE

(30) Priorität: 26.06.2017 EP 17177881
(43) Veröffentlichungstag der Anmeldung: 06.05.2020
(73) Patentinhaber: BASF SE, 67056 Ludwigshafen am Rhein (DE)
(72) Erfinder: SCHAEFER, Frank, 49448 Lemfoerde (DE); POESELT, Elmar, 49448 Lemfoerde (DE); ZARBAKHSH, Sirus, 67056 Ludwigshafen am Rhein (DE)
(74) Vertreter: BASF IP Association
(86) Internationale Anmeldenummer: PCT/EP2018/067060
(87) Internationale Veröffentlichungsnummer: WO 2019/002263

(56) Entgegenhaltungen:
- WO-A1-2010/107562
- WO-A1-2012/173911
- WO-A1-2013/045546
- WO-A1-2015/000722

## Beschreibung

Die vorliegende Erfindung betrifft thermoplastische Polyurethane erhältlich oder erhalten durch Umsetzung mindestens einer Polyisocyanatzusammensetzung enthaltend mindestens ein Polyisocyanat, mindestens eines Kettenverlängerers, und mindestens einer Polyolzusammensetzung, wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen, vorzugsweise 1,4-Butandiol. Weiter betrifft die vorliegende Erfindung ein Herstellungsverfahren für derartige thermoplastische Polyurethane sowie die Verwendung eines erfindungsgemäßen thermoplastischen Polyurethans oder eines thermoplastischen Polyurethans erhältlich oder erhalten nach einem erfindungsgemäßen Verfahren zur Herstellung von Extrusionsprodukten, Filmen und Formkörpern oder zur Herstellung von Polymer-Zusammensetzungen. Die erfindungsgemäßen Polyurethane zeigen eine geringe Tendenz zum Ausblühen (Blooming).

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden. Insbesondere Polyesterpolyole werden aufgrund ihrer günstigen Eigenschaften für hochwertige Polyurethanprodukte verwendet.

So ist aus US 5695884 die Verwendung von Polyesterpolyolen auf Basis von Sebazinsäure für thermoplastische Polyurethane mit hoher Kristallinität bekannt. Auch US 2006/0141883 A1 und US 2006/0121812 beschreiben die Verwendung von Polyesterpolyolen auf Basis von Sebazinsäure für Polyurethane für Fasern mit einem hohen Schmelzpunkt. In der WO 00/51660 A1 werden Polyurethane für Herzkatheder beschrieben, bei denen Polyesterpolyole auf Basis von Sebazinsäure eingesetzt werden können. Auch hierbei ist eine ausreichende Härte erforderlich.

Bei der Verwendung von Polyesterpolyolen zur Herstellung von Polyurethanen tritt jedoch vermehrt das Problem von sehr starken Ausblühungen auf, d.h. es bildet sich ein weißer Belag auf dem verarbeiteten Polyurethan, so dass es optisch für viele potentielle Anwendungen nicht mehr akzeptabel ist.

WO 2010/107562 A1 offenbart ein thermoplastisches Polyurethan, das aus dem Reaktionsprodukt von 1,3-Propandiol und einer Dicarbonsäure erhalten wird. Es wird beschrieben, dass ein Polyurethan erhalten oder erhältlich unter Verwendung eines Homopolyester auf Basis von Adipinsäure und Propandiol weniger ausblüht als ein entsprechendes Polyurethan erhalten oder erhältlich unter Verwendung eines Homopolyester auf Basis auf Adipinsäure und Butandiol.

Für viele Anwendungen reichen jedoch die dort beschriebenen mechanischen Eigenschaften nicht aus.

Eine der vorliegenden Erfindung zugrundeliegende Aufgabe bestand darin, thermoplastische Polyurethane, bereitzustellen, die gute mechanische Eigenschaften aufweisen, und zudem eine reduzierte Neigung zu Ausblühungen haben.

Erfindungsgemäß wird diese Aufgabe gelöst durch ein thermoplastisches Polyurethan, erhältlich oder erhalten durch Umsetzung von mindestens den Komponenten (i) bis (iii):
(i) eine Polyisocyanatzusammensetzung enthaltend mindestens ein Polyisocyanat,
(ii) mindestens ein Kettenverlängerer, und
(iii) mindestens eine Polyolzusammensetzung,
wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen.

Es wurde überraschend gefunden, dass die erfindungsgemäßen thermoplastischen Polyurethane basierend auf Polyestern von Polyolmischungen enthaltend 1,3-Propandiol und ein weiteres Diol (D1) mit 2 bis 12 C-Atomen gegenüber solchen, die auf Polyestern reiner Diole basieren, eine deutlich verringerte Tendenz zu Ausblühungen (Blooming) zeigen und dabei im Vergleich zu handelsüblichen thermoplastischen Polyurethanen vergleichbare, gute mechanische Eigenschaften aufweisen.

Erfindungsgemäß werden mindestens die Komponenten (i) bis (iii) umgesetzt. Zur Herstellung der erfindungsgemäßen Polyurethane wird eine Polyolzusammensetzung eingesetzt, die mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen.

Die Mischung (M1) enthält 1,3-Propandiol und ein weiteres Diol (D1) mit 2 bis 12 C-Atomen. Das Diol (D1) ist vorzugsweise ausgewählt aus der Gruppe bestehend aus Ethylenglykol, 1,4-Butandiol und 1,6-Hexandiol. Erfindungsgemäß besonders bevorzugt ist 1,4-Butandiol. Erfindungsgemäß kann die Mischung (M1) neben 1,3-Propandiol auch 2 oder mehr Diole mit 2 bis 12 C-Atomen enthalten.

Gemäß einer weiteren Ausführungsform betrifft die vorliegende Erfindung daher ein thermoplastisches Polyurethan wie zuvor beschrieben, wobei das Diol (D1) ausgewählt ist aus der Gruppe bestehend aus Ethylenglykol, 1,4-Butandiol und 1,6-Hexandiol. Gemäß einer weiteren Ausführungsform betrifft die vorliegende Erfindung ein thermoplastisches Polyurethan wie zuvor beschrieben, wobei das Diol (D1) 1,4-Butandiol ist. Demgemäß betrifft die vorliegende Erfindung auch ein thermoplastisches Polyurethan, erhältlich oder erhalten durch Umsetzung von mindestens den Komponenten (i) bis (iii):
(i) eine Polyisocyanatzusammensetzung enthaltend mindestens ein Polyisocyanat,
(ii) mindestens ein Kettenverlängerer, und
(iii) mindestens eine Polyolzusammensetzung,
wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol.

Grundsätzlich können dabei erfindungsgemäß alle dem Fachmann bekannten geeigneten Polyesterole eingesetzt werden. Dabei weisen die eingesetzten Polyesterpolyole erfindungsgemäß vorzugsweise eine mittleren Funktionalität im Bereich von 1,8 bis 2,3, bevorzugt im Bereich von 1,9 bis 2,2, insbesondere von 2 auf. Bevorzugt ist das erfindungsgemäße Polyesterpolyol ein Polyesterdiol.

Geeignete Molekulargewichtsbereiche für die erfindungsgemäß eingesetzten Polyesterpolyole sind dem Fachmann an sich bekannt. Gemäß einer bevorzugten Ausführungsform liegt das Molekulargewicht des Polyesterpolyols im Bereich von 750 bis 3000 g/mol, insbesondere bevorzugt im Bereich von 800 und 2500 g/mol und ganz besonders bevorzugt im Bereich von 1000 und 2000 g/mol.

Gemäß einer weiteren Ausführungsform betrifft die vorliegende Erfindung daher ein thermoplastisches Polyurethan wie zuvor beschrieben, wobei das Polyesterpolyol (P1) ein Molekulargewicht Mw im Bereich von 750 bis 3000 g/Mol aufweist.

Erfindungsgemäß besonders geeignete Polyesterpolyole weisen eine OH-Zahl im Bereich von 25 bis 230 mg KOH/g , insbesondere bevorzugt im Bereich von 35 bis 140 mg KOH/g und ganz besonders bevorzugt im Bereich von 40 bis 115 mg KOH/g auf.

Erfindungsgemäß ist das Polyesterpolyol (P1) erhältlich oder erhalten durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen, bevorzugt 1,4-Butandiol.

Im Rahmen der vorliegenden Erfindung kann das Mischungsverhältnis von 1,3-Propandiol und dem Diol (D1) in der Mischung (M1) in weiten Bereichen variieren. Beispielsweise kann das Verhältnis von 1,3-Propandiol und dem Diol (D1) in einem Bereich von 3:1 bis 1:3 liegen. Erfindungsgemäß kann insbesondere das Verhältnis von 1,3-Propandiol und 1,4-Butandiol in einem Bereich von 3:1 bis 1:3 liegen.

Gemäß einer weiteren Ausführungsform betrifft die vorliegende Erfindung daher ein thermoplastisches Polyurethan wie zuvor beschrieben, wobei die Mischung (M1) 1,3-Propandiol und das Diol (D1) in einem Verhältnis im Bereich von 3:1 bis 1:3 enthält. Gemäß einer weiteren Ausführungsform betrifft die vorliegende Erfindung auch ein thermoplastisches Polyurethan wie zuvor beschrieben, wobei die Mischung (M1) 1,3-Propandiol und 1,4-Butandiol in einem Verhältnis im Bereich von 3:1 bis 1:3 enthält.

Erfindungsgemäß kann das Verhältnis von 1,3-Propandiol und dem Diol (D1), insbesondere das Verhältnis von 1,3-Propandiol und 1,4-Butandiol, beispielsweise auch in einem Bereich von 2,5:1 bis 1:2,5, oder im Bereich von 2:1 bis 1:2 oder im Bereich von 1,5:1 bis 1:1,5 oder auch bei 1:1 liegen.

Dabei kann die Mischung (M1) weitere Komponenten, beispielsweise Lösungsmittel oder weitere mehrwertige Alkohole enthalten. Geeignete mehrwertige Alkohole sind beispielsweise mehrwertige aliphatische Alkohole, beispielsweise aliphatische Alkohole mit 2, 3, 4 oder mehr OH-Gruppen, beispielsweise 2 oder 3 OH-Gruppen. Erfindungsgemäß geeignete aliphatische Alkohole sind beispielsweise C2 bis C12 Alkohole, bevorzugt C2 bis C8 Alkohole und ganz besonders bevorzugt C2 bis C6 Alkohole. Geeignete weitere aliphatische C2- bis C6-Diole sind beispielsweise Diethylenglykol, 3-Oxapentan-1,5-diol, 1,2-Propandiol, Dipropylenglykol, 1,5-Pentandiol, 2-Methyl-1,3-propandiol und 3-Methyl-1,5-pentandiol.

Gemäß einer weiteren Ausführungsform betrifft die vorliegende Erfindung daher ein thermoplastisches Polyurethan wie zuvor beschrieben, wobei die Mischung (M1) ein weiteres Diol enthält.

Vorzugsweise enthält die Mischung (M1) neben 1,3-Propandiol und dem Diol (D1), insbesondere neben 1,3-Propandiol und 1,4-Butandiol keine weiteren Alkohole. Gemäß einer besonders bevorzugten Ausführungsform enthält die Mischung (M1) neben 1,3-Propandiol und dem Diol (D1), insbesondere neben 1,3-Propandiol und 1,4-Butandiol keine weiteren Komponenten.

Erfindungsgemäß ist es auch möglich, dass Propandiol und/oder ein weiteres Diol, beispielsweise Butandiol, eingesetzt wird, der zumindest teilweise aus nachwachsenden Rohstoffen gewonnen wurde. Dabei ist es möglich, dass der mehrwertige Alkohol teilweise oder vollständig aus nachwachsenden Rohstoffen gewonnen wurde. Erfindungsgemäß kann mindestens einer der eingesetzten mehrwertigen Alkohole zumindest teilweise aus nachwachsenden Rohstoffen gewonnen werden.

Bei dem 1,3-Propandiol kann es sich demgemäß um synthetisch hergestelltes 1,3-Propandiol, insbesondere jedoch um 1,3-Propandiol aus nachwachsenden Rohstoffen ("Bio-1,3-Propandiol"), handeln. Bio-1,3-Propandiol kann beispielsweise aus Mais und/oder Zucker gewonnen werden. Eine weitere Möglichkeit ist die Umwandlung von Glycerinabfällen aus der Biodiesel-Produktion. Gemäß einer weiteren bevorzugten Ausführungsform der Erfindung ist der mehrwertige Alkohol 1,3-Propandiol, das zumindest teilweise aus nachwachsenden Rohstoffen gewonnen wurde.

Gemäß einer weiteren Ausführungsform betrifft die vorliegende Erfindung auch ein Polyurethan wie zuvor beschrieben, wobei der mindestens eine mehrwertige Alkohol 1,3-Propandiol ist, das zumindest teilweise aus nachwachsenden Rohstoffen gewonnen wurde.

Erfindungsgemäß wird eine aliphatische Dicarbonsäure mit 2 bis 12 C-Atomen zur Herstellung des Polyesterpolyols (P1) eingesetzt.

Die eingesetzte Dicarbonsäure kann dabei im Rahmen der vorliegenden Erfindung linear oder verzweigt sein. Vorzugsweise ist die Dicarbonsäure im Rahmen der vorliegenden Erfindung ausgewählt aus Dicarbonsäuren mit 4 bis 12 C-Atomen, besonders bevorzugt aus Dicarbonsäuren mit 6 bis 10 C-Atomen. Insbesondere bevorzugt wird im Rahmen der vorliegenden Erfindung als Dicarbonsäure Adipinsäure eingesetzt. Erfindungsgemäß ist es auch möglich, dass Mischungen aus zwei oder mehr der genannten Dicarbonsäuren eingesetzt werden.

Gemäß einer weiteren Ausführungsform betrifft die vorliegende Erfindung daher ein thermoplastisches Polyurethan wie zuvor beschrieben, wobei die aliphatische Dicarbonsäure Adipinsäure ist.

Gemäß einer bevorzugten Ausführungsform der vorliegenden Erfindung werden zur Herstellung des Polyesterpolyols (P1) neben der Mischung (M1) und der aliphatischen Dicarbonsäure mit 2 bis 12 C-Atomen keine weiteren Komponenten eingesetzt. Demgemäß werden gemäß einer besonders bevorzugten Ausführungsform der vorliegenden Erfindung zur Herstellung des Polyesterpolyols (P1) Adipinsäure und die Mischung (M1) bestehend 1,3-Propandiol und dem Diol (D1) eingesetzt.

Zur Herstellung des erfindungsgemäßen thermoplastischen Polyurethans wird als Komponente (ii) mindestens ein Kettenverlängerer eingesetzt.

Geeignete Kettenverlängerer sind dem Fachmann grundsätzlich bekannt. Geeignet sind beispielsweise Verbindungen, die mindestens zwei gegenüber Isocyanaten reaktive funktionelle Gruppen aufweisen, beispielsweise Hydroxyl-Gruppen, Amino-Gruppen oder Thiol-Gruppen. Gemäß einer weiteren Ausführungsform betrifft die vorliegende Erfindung demgemäß ein thermoplastisches Polyurethan wie zuvor beschrieben, wobei mindestens ein Kettenverlängerer eingesetzt wird ausgewählt aus der Gruppe bestehend aus Verbindungen mit mindestens zwei gegenüber Isocyanaten reaktiven funktionellen Gruppen.

Als Kettenverlängerer geeignet sind beispielsweise Verbindungen, ausgewählt aus der Gruppe bestehend aus aliphatischen und aromatischen Diolen mit einem Molekulargewicht von <500 g/mol, bevorzugt <350 g/mol. Gemäß einer weiteren Ausführungsform betrifft die vorliegende Erfindung auch ein thermoplastisches Polyurethan wie zuvor beschrieben, wobei mindestens ein weiterer Kettenverlängerer (KV2) eingesetzt wird, ausgewählt aus der Gruppe bestehend aus aliphatischen und aromatischen Diolen mit einem Molekulargewicht von <500 g/mol.

Erfindungsgemäß bevorzugt werden als weitere Kettenverlängerer (KV2) Diole eingesetzt. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,4-Butandiol, 1,6-Hexandiol und Hydroquinone bis(2-hydroxyethyl)ether.

Auch verzweigte Verbindungen wie 1,4-Cyclohexyldimethanol, 2-Butyl-2-ethylpopandiol, Neopentylglykol, 2,2,4-Trimethyl-1,3-pentanediol, Pinakol, 2-Ethyl-1,3-hexandiol, 1,4-Cyclohexandiol, oder N-Phenyldiethanolamin sind im Rahmen der vorliegenden Erfindung als Kettenverlängerer geeignet. Ebenfalls geeignet sind gemischte Verbindungen wie beispielsweise 4-Aminobutanol.

Im Rahmen der vorliegenden Erfindung kann die eingesetzte Menge des Kettenverlängerers und der Polyolzusammensetzung in weiten Bereichen variieren. Beispielsweise werden die Komponente (iii) und die Komponente (ii) in einem molaren Verhältnis von (iii) zu (ii) von 1 zu 0,7, 1 zu 2,7 und 1 zu 7,3 eingesetzt.

Erfindungsgemäß enthält die Polyolzusammensetzung mindestens ein Polyesterpolyol (P1). Erfindungsgemäß kann die Polyolzusammensetzung auch weitere Polyole enthalten. Geeignete Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegt vorzugsweise zwischen 0,5x10³g/mol und 8 x10³ g/mol, bevorzugt zwischen 0,6 x10³ g/mol und 5 x10³ g/mol, insbesondere zwischen 0,8 x10³ g/mol und 3 x10³ g/mol.

Erfindungsgemäß sind Polyetherole geeignet, aber auch Polyesterole, Blockcopolymere sowie Hybrid Polyole wie z.B. Poly(ester/amid). Bevorzugte Polyetherole sind erfindungsgemäß Polyethylenglykole, Polypropylenglykole, Polyadipate, Polycarbonat(diol)e und Polycaprolacton.

Gemäß einer weiteren Ausführungsform betrifft die vorliegende Erfindung auch ein thermoplastisches Polyurethan wie zuvor beschrieben, wobei die Polyolzusammensetzung ein Polyol ausgewählt aus der Gruppe bestehend aus Polyetherolen, Polyesterolen, Polycaprolactonen und Polycarbonaten enthält.

Geeignete Blockcopolymere sind beispielsweise solche, die Ether und Esterblöcke aufweisen, wie beispielsweise Polycaprolacton mit Polyethylenoxid oder Polypropylenoxid-Endblöcken oder auch Polyether mit Polycaprolactonendblöcken. Bevorzugte Polyetherole sind erfindungsgemäß Polyethyleneglykole, Polypropylenglykole. Weiterhin bevorzugt ist Polycaprolacton.

Bevorzugt hat die Polyolzusammensetzung eine mittlere Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß kann die Polyolzusammensetzung auch ein Lösungsmittel enthalten. Geeignete Lösungsmittel sind dem Fachmann an sich bekannt.

Erfindungsgemäß wird zur Herstellung des thermoplastischen Polyurethans als Komponente (i) eine Polyisocyanatzusammensetzung enthaltend mindestens ein Polyisocyanat eingesetzt. Bevorzugte Polyisocyanate sind im Rahmen der vorliegenden Erfindung Diisocyanate, insbesondere aliphatische oder aromatische Diisocyanate, weiter bevorzugt aromatische Diisocyanate.

Gemäß einer weiteren Ausführungsform betrifft die vorliegende Erfindung daher ein thermoplastisches Polyurethan wie zuvor beschrieben, wobei das Polyisocyanat ein aliphatisches oder aromatisches Diisocyanat ist.

Des Weiteren können im Rahmen der vorliegenden Erfindung vorreagierte Produkte als Isocyanatkomponenten eingesetzt werden, bei denen ein Teil der OH-Komponenten in einem vorgelagerten Reaktionsschritt mit einem Isocyanat zur Reaktion gebracht werden. Die erhaltenen Produkte werden in einem nachfolgenden Schritt, der eigentlichen Polymerreaktion, mit den restlichen OH-Komponenten zur Reaktion gebracht und bilden dann das thermoplastische Polyurethan.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Geeignete aromatische Diisocyanate sind insbesondere 1,5-Naphthylendiisocyanat (NDI), 2,4- und/oder 2,6-Toluylendiisocyanat (TDI), 2,2'-, 2,4'- und/oder 4,4'-Diphenylmethandiisocyanat (MDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethandiisocyanat und/oder Phenylendiisocyanat.

Gemäß einer weiteren Ausführungsform betrifft die vorliegende Erfindung daher ein thermoplastisches Polyurethan wie zuvor beschrieben, wobei das Polyisocyanat ausgewählt ist aus der Gruppe bestehend aus Methylendiphenyldiisocyanat (MDI), 2,4- und/oder 2,6-Toluylendiisocyanat (TDI), Hexamethylen-1,6-diisocyanat (HDI), 4,4'-, 2,4'- und/oder 2,2'-Methylendicyclohexyldiisocyanat (H12MDI) und Isophorondiisocyanat (IPDI).

Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurethe der vorgenannten Diisocyanate, ferner Oligomere, die durch gezielte Umsetzung von semiblockierten Diisocyanaten mit Polyolen, die im Mittel mehr als zwei und vorzugsweise drei oder mehr Hydroxy-Gruppen aufweisen, erhältlich sind.

Erfindungsgemäß kann die Polyisocyanatzusammensetzung auch ein oder mehrere Lösungsmittel enthalten. Geeignete Lösungsmittel sind dem Fachmann bekannt. Geeignet sind beispielsweise nicht reaktive Lösungsmittel wie Ethylacetat, Methylethylketon und Kohlenwasserstoffe.

Weiter können im Rahmen der vorliegenden Erfindung auch Vernetzer eingesetzt werden, beispielsweise die zuvor genannten höherfunktionellen Polyisocyanate oder Polyole oder auch andere höherfunktionale Moleküle mit mehreren gegenüber Isocyanaten reaktiven funktionellen Gruppen. Ebenso ist es im Rahmen der vorliegenden Erfindung möglich, eine Vernetzung der Produkte durch einen Überschuss der eingesetzten Isocyanatgruppen im Verhältnis zu den Hydroxylgruppen zu erreichen.

Erfindungsgemäß werden die Komponenten (i) bis (iii) in einem Verhältnis eingesetzt, so dass das molare Verhältnis aus der Summe der Funktionalitäten der eingesetzten Polyolzusammensetzung und Kettenverlängerer zu der Summe der Funktionalitäten der eingesetzten Isocyanatzusammensetzung im Bereich von 1 zu 0,8 bis 1 zu 1,3 liegt. Bevorzugt liegt das Verhältnis im Bereich von 1 zu 0,9 bis 1 zu 1,2, weiter bevorzugt im Bereich von 1 zu 0,965 bis 1 zu 1,11, weiter bevorzugt im Bereich von 1 zu 0,97 bis 1 zu 1,11, weiter bevorzugt im Bereich von 1 zu 0,97 bis 1 zu 1,05, besonders bevorzugt im Bereich von 1 zu 0,98 bis 1 zu 1,03.

Gemäß einer weiteren Ausführungsform betrifft die vorliegende Erfindung ein thermoplastisches Polyurethan wie zuvor beschrieben, wobei das molare Verhältnis aus der Summe der Funktionalitäten der eingesetzten Polyolzusammensetzung und Kettenverlängerer zu der Summe der Funktionalitäten der eingesetzten Isocyanatzusammensetzung im Bereich von 1 zu 0,8 bis 1 zu 1,3 liegt.

Eine weitere Größe, die bei der Umsetzung der Komponenten (i) bis (iii) berücksichtigt wird, ist die Isocyanat-Kennzahl. Hierbei ist die Kennzahl definiert durch das Verhältnis der insgesamt bei der Umsetzung eingesetzten Isocyanatgruppen der Komponente (i) zu den Isocyanat-reaktiven Gruppen, also insbesondere den Gruppen der Komponenten (ii) und (iii). Bei einer Kennzahl von 1000 kommt auf eine Isocyanatgruppe der Komponente (i) ein aktives Wasserstoffatom. Bei Kennzahlen über 1000 liegen mehr Isocyanatgruppen als Isocyanat-reaktiven Gruppen vor. Bevorzugt liegt die Kennzahl bei der Umsetzung der Komponenten (i) bis (iii) im Bereich von 965 bis 1110, beispielsweise im Bereich von 970 bis 1110, weiter bevorzugt im Bereich von 970 bis 1050, besonders bevorzugt im Bereich von 980 bis 1030.

Gemäß einer weiteren Ausführungsform betrifft die vorliegende Erfindung ein thermoplastisches Polyurethan wie zuvor beschrieben, wobei die Kennzahl bei der Umsetzung im Bereich von 965 bis 1100 liegt.

Erfindungsgemäß können bei der Umsetzung der Komponenten (i) bis (iii) weitere Additive zugesetzt werden, beispielsweise Katalysatoren oder Hilfs- und Zusatzstoffe. Zusatzstoffe und Hilfsmittel sind dem Fachmann an sich bekannt. Erfindungsgemäß können auch Kombinationen aus mehreren Additiven eingesetzt werden.

Im Rahmen der vorliegenden Erfindung werden unter dem Begriff Additiv insbesondere Katalysatoren, Hilfsstoffe und Zusatzstoffe verstanden, insbesondere Stabilisatoren, Nukleationsmittel, Trennmittel, Entformungshilfen, Füllstoffe, Flammschutzmittel oder Vernetzer.

Geeignete Additive bzw. Zusatzstoffe sind beispielsweise Stabilisatoren, Nukleationsmittel, Füllstoffe wie z.B. Silikate oder Vernetzer wie z.B. mehrfunktionale Alumosilikate.

Gemäß einer weiteren Ausführungsform betrifft die vorliegende Erfindung demgemäß ein thermoplastisches Polyurethan wie zuvor beschrieben, wobei das thermoplastische Polyurethan mindestens ein Additiv enthält.

Als Hilfs- und Zusatzstoffe genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Bismuthverbindungen, wie Bismuthalkylverbindungen oder ähnliche, oder Eisenverbindungen, bevorzugt Eisen-(MI)-acetylacetonat oder die Metallsalze der Carbonsäuren wie z.B. Zinn-II-isooctoat, Zinndioctoat, Titansäureester oder Bismut-(III)-neodecanoat.

Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 0 bis 2000 ppm, bevorzugt 1 ppm bis 1000 ppm, weiter bevorzugt 2 ppm bis 500 ppm und am meisten bevorzugt von 5 ppm bis 300 ppm eingesetzt.

Die Eigenschaften der erfindungsgemäßen thermoplastischen Polyurethane können je nach Anwendung in weiten Bereichen variieren.

Gemäß einem weiteren Aspekt betrifft die vorliegende Erfindung auch ein Verfahren zur Herstellung eines thermoplastischen Polyurethans, umfassend die Umsetzung von mindestens den Komponenten (i) bis (iii):
(i) eine Polyisocyanatzusammensetzung enthaltend mindestens ein Polyisocyanat,
(ii) mindestens ein Kettenverlängerer, und
(iii) mindestens eine Polyolzusammensetzung,
wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen.

Bezüglich bevorzugter Ausführungsformen des Verfahrens, geeigneter Einsatzstoffe oder Mischungsverhältnisse wird auf die obigen Ausführungen verwiesen, die entsprechend gelten.

Die Umsetzung der Komponenten (i) bis (iii) kann prinzipiell unter an sich bekannten Reaktionsbedingungen durchgeführt werden. Die Umsetzung kann dabei diskontinuierlich oder auch kontinuierlich erfolgen, beispielsweise in einem Bandverfahren oder einem Reaktionsextrusionsverfahren. Geeignete Verfahren werden beispielsweise beschrieben in EP 0 922 552 A1 oder WO 2006/082183 A1.

Die Herstellung der Polyurethane kann nach den bekannten Verfahren diskontinuierlich oder kontinuierlich, beispielsweise mit Reaktionsextrudern oder dem Bandverfahren nach one-shot oder dem Prepolymerverfahren, bevorzugt nach dem one-shot Verfahren erfolgen. Bei diesen Verfahren können die zur Reaktion kommenden Komponenten nacheinander oder gleichzeitig miteinander vermischt werden, wobei die Reaktion unmittelbar einsetzt. Beim Extruderverfahren werden die Aufbaukomponenten sowie gegebenenfalls Kettenverlängerer, Katalysator und/oder Zusatzstoffe einzeln oder als Gemisch in den Extruder eingeführt, z. B. bei Temperaturen von 100 bis 280°C, vorzugsweise 140 bis 250°C zur Reaktion gebracht, das erhaltene Polyurethan wird extrudiert, abgekühlt und granuliert.

Gemäß einer bevorzugten Ausführungsform wird die Umsetzung der Komponenten (i) bis (iii) unter erhöhten Temperaturen als Raumtemperatur durchgeführt.

Das Erwärmen kann erfindungsgemäß auf jede dem Fachmann bekannte geeignete Art erfolgen. Bevorzugt können auch die Einsatzstoffe vor der Zugabe erwärmt werden, beispielsweise unter Verwendung von beheizbaren Dosiereinheiten.

Dabei wird beispielsweise bei einer Umsetzung mittels Reaktionsextrusionsverfahren die Reaktion derart geführt, dass die Zonentemperatur im Bereich von 170 °C bis 245 °C liegt, bevorzugt im Bereich von 180 °C bis 235 °C, weiter bevorzugt im Bereich von 190 °C bis 230 °C.

Erfindungsgemäß ist es auch möglich, dass das Verfahren weitere Schritte umfasst, beispielsweise eine Vorbehandlung der Komponenten oder eine Nachbehandlung des erhaltenen thermoplastischen Polyurethans. Demgemäß betrifft die vorliegende Erfindung gemäß einer weiteren Ausführungsform auch ein Verfahren zur Herstellung eines thermoplastischen Polyurethans wie zuvor beschrieben, wobei nach der Umsetzung das erhaltene thermoplastische Polyurethan getempert wird.

Die Verarbeitung der erfindungsgemäßen Polyurethane, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z. B. Spritzguss, Kalendrieren oder Extrusion.

Das erfindungsgemäße thermoplastische Polyurethan bzw. ein nach einem erfindungsgemäßen Verfahren erhaltenes oder erhältliches thermoplastisches Polyurethan kann vielseitig verwendet werden. Insbesondere sind die erfindungsgemäßen thermoplastischen Polyurethane für die Herstellung von Formteilen und Folien geeignet. Mögliche Anwendungen sind beispielsweise Dichtungen, Dichtungsringe, Dichtplatte, Dichtscheiben, Dichtungsmittel, Dichtmasse, Abdichtmittel oder Schuhaußensohlen. Weitere Anwendungen sind beispielsweise Schläuche für u.a. pneumatische Anwendungen, Förderbänder, Folien, Verpackungsmaterial, Kabel, Fußbodenanwendungen, Schock- und Geräuschabsorber.

Gemäß einem weiteren Aspekt betrifft die vorliegende Erfindung auch die Verwendung eines thermoplastischen Polyurethans wie zuvor beschrieben oder eines thermoplastischen Polyurethans erhältlich oder erhalten nach einem erfindungsgemäßen Verfahren zur Herstellung von Extrusionsprodukten, Filmen und Formkörpern, insbesondere zur Herstellung von Kabelummantelungen, Schläuchen und Dichtungen.

Demgemäß betrifft die vorliegende Erfindung auch ein Verfahren zur Herstellung eines Formkörpers (FK) umfassend die folgenden Schritte:
(a) Herstellung eines thermoplastischen Polyurethans umfassend die Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
      wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen;
(b) Herstellung eines Formkörpers (FK) aus dem thermoplastischen Polyurethan.

Bezüglich der bevorzugten Ausführungsformen wird auf die obigen Ausführungen verwiesen. Gängige Verfahren zur Herstellung eines Formkörpers (FK) aus dem thermoplastischen Polyurethan gemäß Schritt (b) sind dem Fachmann an sich bekannt. Das Verfahren kann auch weitere Schritte zwischen den Schritten (a) und (b) umfassen, beispielsweise eine Behandlung des thermoplastischen Polyurethans oder eine Temperaturbehandlung.

Gemäß einer weiteren Ausführungsform betrifft die vorliegenden Erfindung auch die Verwendung eines thermoplastischen Polyurethans wie zuvor beschrieben oder eines thermoplastischen Polyurethans erhältlich oder erhalten nach einem erfindungsgemäßen Verfahren zur Herstellung von Extrusionsprodukten, Filmen und Formkörpern, wobei das Extrusionsprodukt, der Film oder die Folie mit Füllstoffen verstärkt ist.

Überraschender Weise hat sich gezeigt, dass die erfindungsgemäßen thermoplastischen Polyurethane bzw. die nach einem erfindungsgemäßen Verfahren erhaltenen thermoplastischen Polyurethane gut für die Herstellung von geschäumten Materialien geeignet sind. Dabei können die erfindungsgemäßen thermoplastischen Polyurethane in an sich bekannter Weise zu geschäumten Materialien verarbeitete werden. Dabei werden gegebenenfalls Zusatzstoffe wie Treibmittel, Zellreglern, oberflächenaktiven Substanzen, Nukleationsmittel, Füllstoffen, Mikrohohlkugeln und/oder Trennmittel eingesetzt. Geeignete Verfahren und Zusatzstoffe sind beispielsweise in der WO2014/198779 A1, in WO 2007/082838 A1 oder WO 94/20568 A1 offenbart.

Somit betrifft die vorliegende Erfindung gemäß einem weiteren Aspekt auch die Verwendung eines thermoplastischen Polyurethans wie zuvor beschrieben oder eines thermoplastischen Polyurethans erhältlich oder erhalten nach einem erfindungsgemäßen Verfahren zur Herstellung von geschäumten Folien, geschäumten Formteilen oder geschäumten Partikeln sowie den daraus erhältlichen Partikelschäumen.

Gemäß einer weiteren Ausführungsform betrifft die vorliegende Erfindung auch die Verwendung eines thermoplastischen Polyurethans wie zuvor beschrieben oder eines thermoplastischen Polyurethans erhältlich oder erhalten nach einem erfindungsgemäßen Verfahren zur Herstellung von geschäumten Folien, geschäumten Formteilen oder geschäumten Partikeln sowie den daraus erhältlichen Partikelschäumen, wobei die geschäumten Folien, geschäumten Formteile oder geschäumten Partikel und daraus erhältlichen Partikelschäume mit Füllstoffen verstärkt sind.

Im Rahmen der vorliegenden Erfindung kann das erfindungsgemäße thermoplastische Polyurethan bzw. ein gemäß dem erfindungsgemäßen Verfahren erhaltenes oder erhältliches thermoplastisches Polyurethan auch in Polymer-Zusammensetzungen bzw. Polymer-Blends eingesetzt werden. Derartige Polymer-Zusammensetzungen bzw. Polymer-Blends enthalten das erfindungsgemäße thermoplastische Polyurethan bzw. ein gemäß dem erfindungsgemäßen Verfahren erhaltenes oder erhältliches thermoplastisches Polyurethan sowie ein oder mehrere weitere Polymere. Demgemäß betrifft die Vorliedende Erfindung auch die Verwendung eines thermoplastischen Polyurethans wie zuvor beschrieben oder eines thermoplastischen Polyurethans erhältlich oder erhalten nach einem erfindungsgemäßen Verfahren zur Herstellung von Polymer-Zusammensetzungen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Thermoplastisches Polyurethan, erhältlich oder erhalten durch Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen.
2. Thermoplastisches Polyurethan gemäß Ausführungsform 1, wobei das Diol (D1) ausgewählt ist aus der Gruppe bestehend aus Ethylenglykol, 1,4-Butandiol und 1,6-Hexandiol.
3. Thermoplastisches Polyurethan gemäß Ausführungsform 1, wobei das Diol (D1) 1,4-Butandiol ist.
4. Thermoplastisches Polyurethan gemäß einer der Ausführungsformen 1 bis 3, wobei die aliphatische Dicarbonsäure Adipinsäure ist.
5. Thermoplastisches Polyurethan gemäß einer der Ausführungsformen 1 bis 4, wobei die Mischung (M1) 1,3-Propandiol und das Diol (D1) in einem Verhältnis im Bereich von 3:1 bis 1:3 enthält.
6. Thermoplastisches Polyurethan gemäß einer der Ausführungsformen 1 bis 5, wobei die Mischung (M1) ein weiteres Diol enthält.
7. Thermoplastisches Polyurethan gemäß einer der Ausführungsformen 1 bis 6, wobei das Polyesterpolyol (P1) ein Molekulargewicht Mw im Bereich von 750 bis 3000 g/Mol aufweist.
8. Thermoplastisches Polyurethan gemäß einer der Ausführungsformen 1 bis 7, wobei der gemäß (ii) eingesetzte Kettenverlängerer ausgewählt ist aus der Gruppe bestehend aus aliphatischen und aromatischen Diolen mit einem Molekulargewicht von <500 g/mol.
9. Thermoplastisches Polyurethan gemäß einer der Ausführungsformen 1 bis 8, wobei das Polyisocyanat ein aliphatisches oder aromatisches Diisocyanat ist.
10. Thermoplastisches Polyurethan gemäß einer der Ausführungsformen 1 bis 9, wobei das Polyisocyanat ausgewählt ist aus der Gruppe bestehend aus Methylendiphenyldiisocyanat (MDI), 2,4- und/oder 2,6-Toluylendiisocyanat (TDI), Hexamethylen-1,6-diisocyanat (HDI), 4,4'-, 2,4'- und/oder 2,2'-Methylendicyclohexyldiisocyanat (H12MDI) und Isophorondiisocyanat (IPDI).
11. Verfahren zur Herstellung eines thermoplastischen Polyurethans, umfassend die Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen.
12. Verfahren gemäß Ausführungsform 11, wobei das Diol (D1) ausgewählt ist aus der Gruppe bestehend aus Ethylenglykol, 1,4-Butandiol und 1,6-Hexandiol.
13. Verfahren gemäß Ausführungsform 11, wobei das Diol (D1) 1,4-Butandiol ist.
14. Verfahren gemäß einer der Ausführungsformen 11 bis 13, wobei die aliphatische Dicarbonsäure Adipinsäure ist.
15. Verfahren gemäß einer der Ausführungsformen 11 bis 14, wobei die Mischung (M1) 1,3-Propandiol und das Diol (D1) in einem Verhältnis im Bereich von 3:1 bis 1:3 enthält.
16. Verfahren gemäß einer der Ausführungsformen 11 bis 15, wobei die Mischung (M1) ein weiteres Diol enthält.
17. Verfahren gemäß einer der Ausführungsformen 11 bis 16, wobei das Polyesterpolyol (P1) ein Molekulargewicht Mw im Bereich von 750 bis 3000 g/Mol aufweist.
18. Verfahren gemäß einer der Ausführungsformen 11 bis 17, wobei der gemäß (ii) eingesetzte Kettenverlängerer ausgewählt ist aus der Gruppe bestehend aus aliphatischen und aromatischen Diolen mit einem Molekulargewicht von <500 g/mol.
19. Verfahren gemäß einer der Ausführungsformen 11 bis 18, wobei das Polyisocyanat ein aliphatisches oder aromatisches Diisocyanat ist.
20. Verfahren gemäß einer der Ausführungsformen 11 bis 19, wobei das Polyisocyanat ausgewählt ist aus der Gruppe bestehend aus Methylendiphenyldiisocyanat (MDI), 2,4- und/oder 2,6-Toluylendiisocyanat (TDI), Hexamethylen-1,6-diisocyanat (HDI), 4,4'-, 2,4'- und/oder 2,2'-Methylendicyclohexyldiisocyanat (H12MDI) und Isophorondiisocyanat (IPDI).
21. Verfahren zur Herstellung eines Formkörpers (FK) umfassend die folgenden Schritte:
   (a) Herstellung eines thermoplastischen Polyurethans umfassend die Umsetzung von mindestens den Komponenten (i) bis (iii):
      (i) eine Polyisocyanatzusammensetzung enthaltend mindestens ein Polyisocyanat,
      (ii) mindestens ein Kettenverlängerer, und
      (iii) mindestens eine Polyolzusammensetzung,
         wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen;
   (b) Herstellung eines Formkörpers (FK) aus dem thermoplastischen Polyurethan.
22. Verfahren gemäß Ausführungsform 21, wobei das Diol (D1) ausgewählt ist aus der Gruppe bestehend aus Ethylenglykol, 1,4-Butandiol und 1,6-Hexandiol.
23. Verfahren gemäß Ausführungsform 21, wobei das Diol (D1) 1,4-Butandiol ist.
24. Verfahren gemäß einer der Ausführungsformen 21 bis 23, wobei die aliphatische Dicarbonsäure Adipinsäure ist.
25. Verfahren gemäß einer der Ausführungsformen 21 bis 24, wobei die Mischung (M1) 1,3-Propandiol und das Diol (D1) in einem Verhältnis im Bereich von 3:1 bis 1:3 enthält.
26. Verfahren gemäß einer der Ausführungsformen 21 bis 25, wobei die Mischung (M1) ein weiteres Diol enthält.
27. Verfahren gemäß einer der Ausführungsformen 21 bis 26, wobei das Polyesterpolyol (P1) ein Molekulargewicht Mw im Bereich von 750 bis 3000 g/Mol aufweist.
28. Verfahren gemäß einer der Ausführungsformen 21 bis 27, wobei der gemäß (ii) eingesetzte Kettenverlängerer ausgewählt ist aus der Gruppe bestehend aus aliphatischen und aromatischen Diolen mit einem Molekulargewicht von <500 g/mol.
29. Verfahren gemäß einer der Ausführungsformen 21 bis 28, wobei das Polyisocyanat ein aliphatisches oder aromatisches Diisocyanat ist.
30. Verfahren gemäß einer der Ausführungsformen 21 bis 29, wobei das Polyisocyanat ausgewählt ist aus der Gruppe bestehend aus Methylendiphenyldiisocyanat (MDI), 2,4- und/oder 2,6-Toluylendiisocyanat (TDI), Hexamethylen-1,6-diisocyanat (HDI), 4,4'-, 2,4'- und/oder 2,2'-Methylendicyclohexyldiisocyanat (H12MDI) und Isophorondiisocyanat (IPDI).
31. Verwendung eines thermoplastischen Polyurethans gemäß einer der Ausführungsformen 1 bis 10 oder eines thermoplastischen Polyurethans erhältlich oder erhalten nach einem Verfahren gemäß einer der Ausführungsformen 11 bis 20 zur Herstellung von Extrusionsprodukten, Filmen und Formkörpern.
32. Verwendung gemäß Ausführungsform 31, wobei das Extrusionsprodukt, der Film oder die Folie mit Füllstoffen verstärkt ist.
33. Verwendung eines thermoplastischen Polyurethans gemäß einer der Ausführungsformen 1 bis 10 oder eines thermoplastischen Polyurethans erhältlich oder erhalten nach einem Verfahren gemäß einer der Ausführungsformen 11 bis 20zur Herstellung von Polymer-Zusammensetzungen.
34. Thermoplastisches Polyurethan, erhältlich oder erhalten durch Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol.
35. Thermoplastisches Polyurethan gemäß Ausführungsform 34, wobei die aliphatische Dicarbonsäure Adipinsäure ist.
36. Thermoplastisches Polyurethan gemäß Ausführungsform 34 oder 35, wobei die Mischung (M1) 1,3-Propandiol und 1,4-Butandiol in einem Verhältnis im Bereich von 3:1 bis 1:3 enthält.
37. Thermoplastisches Polyurethan gemäß einer der Ausführungsformen 34 bis 36, wobei die Mischung (M1) 1,6-Hexandiol enthält.
38. Thermoplastisches Polyurethan gemäß einer der Ausführungsformen 34 bis 37, wobei die Mischung (M1) aus 1,3-Propandiol und 1,4-Butandiol besteht.
39. Thermoplastisches Polyurethan gemäß einer der Ausführungsformen 34 bis 38, wobei das Polyesterpolyol (P1) ein Molekulargewicht Mw im Bereich von 750 bis 3000 g/Mol aufweist.
40. Thermoplastisches Polyurethan gemäß einer der Ausführungsformen 34 bis 39, wobei der gemäß (ii) eingesetzte Kettenverlängerer ausgewählt ist aus der Gruppe bestehend aus aliphatischen und aromatischen Diolen mit einem Molekulargewicht von <500 g/mol.
41. Thermoplastisches Polyurethan gemäß einer der Ausführungsformen 34 bis 40, wobei das Polyisocyanat ein aliphatisches oder aromatisches Diisocyanat ist.
42. Thermoplastisches Polyurethan gemäß einer der Ausführungsformen 34 bis 41, wobei das Polyisocyanat ausgewählt ist aus der Gruppe bestehend aus Methylendiphenyldiisocyanat (MDI), 2,4- und/oder 2,6-Toluylendiisocyanat (TDI), Hexamethylen-1,6-diisocyanat (HDI), 4,4'-, 2,4'- und/oder 2,2'-Methylendicyclohexyldiisocyanat (H12MDI) und Isophorondiisocyanat (IPDI).
43. Thermoplastisches Polyurethan, erhältlich oder erhalten durch Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol,
   wobei die aliphatische Dicarbonsäure Adipinsäure ist und Mischung (M1) aus 1,3-Propandiol und 1,4-Butandiol besteht.
44. Thermoplastisches Polyurethan, erhältlich oder erhalten durch Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol,
   wobei die Mischung (M1) 1,3-Propandiol und 1,4-Butandiol in einem Verhältnis im Bereich von 3:1 bis 1:3 enthält.
45. Thermoplastisches Polyurethan, erhältlich oder erhalten durch Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol,
   wobei die aliphatische Dicarbonsäure Adipinsäure ist, und
   wobei die Mischung (M1) 1,3-Propandiol und 1,4-Butandiol in einem Verhältnis im Bereich von 3:1 bis 1:3 enthält.
46. Thermoplastisches Polyurethan, erhältlich oder erhalten durch Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol,
   wobei die aliphatische Dicarbonsäure Adipinsäure ist,
   wobei die Mischung (M1) 1,3-Propandiol und 1,4-Butandiol in einem Verhältnis im Bereich von 3:1 bis 1:3 enthält,
   wobei das Polyesterpolyol (P1) ein Molekulargewicht Mw im Bereich von 750 bis 3000 g/Mol aufweist,
   wobei der gemäß (ii) eingesetzte Kettenverlängerer ausgewählt ist aus der Gruppe bestehend aus aliphatischen und aromatischen Diolen mit einem Molekulargewicht von <500 g/mol, und
   wobei das Polyisocyanat ausgewählt ist aus der Gruppe bestehend aus Methylendiphenyldiisocyanat (MDI), 2,4- und/oder 2,6-Toluylendiisocyanat (TDI), Hexamethylen-1,6-diisocyanat (HDI), 4,4'-, 2,4'- und/oder 2,2'-Methylendicyclohexyldiisocyanat (H12MDI) und Isophorondiisocyanat (IPDI).
47. Thermoplastisches Polyurethan, erhältlich oder erhalten durch Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol,
   wobei die aliphatische Dicarbonsäure Adipinsäure ist,
   wobei die Mischung (M1) 1,6-Hexandiol enthält,
   wobei das Polyesterpolyol (P1) ein Molekulargewicht Mw im Bereich von 750 bis 3000 g/Mol aufweist,
   wobei der gemäß (ii) eingesetzte Kettenverlängerer ausgewählt ist aus der Gruppe bestehend aus aliphatischen und aromatischen Diolen mit einem Molekulargewicht von <500 g/mol,
   wobei das Polyisocyanat ausgewählt ist aus der Gruppe bestehend aus Methylendiphenyldiisocyanat (MDI), 2,4- und/oder 2,6-Toluylendiisocyanat (TDI), Hexamethylen-1,6-diisocyanat (HDI), 4,4'-, 2,4'- und/oder 2,2'-Methylendicyclohexyldiisocyanat (H12MDI) und Isophorondiisocyanat (IPDI).
48. Verfahren zur Herstellung eines thermoplastischen Polyurethans, umfassend die Umsetzung von mindestens den Komponenten (i) bis (iii):
   (i) eine Polyisocyanatzusammensetzung enthaltend mindestens ein Polyisocyanat,
   (ii) mindestens ein Kettenverlängerer, und
   (iii) mindestens eine Polyolzusammensetzung,
   wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol.
49. Verfahren zur Herstellung eines Formkörpers (FK) umfassend die folgenden Schritte:
   (a) Herstellung eines thermoplastischen Polyurethans umfassend die Umsetzung von mindestens den Komponenten (i) bis (iii):
      (i) einer Polyisocyanatzusammensetzung enthaltend mindestens ein Polyisocyanat,
      (ii) mindestens eines Kettenverlängerers, und
      (iii) mindestens einer Polyolzusammensetzung,
         wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und 1,4-Butandiol;
   (b) Herstellung eines Formkörpers (FK) aus dem thermoplastischen Polyurethan.
50. Verfahren gemäß Ausführungsform 48 oder 49, wobei die aliphatische Dicarbonsäure Adipinsäure ist.
51. Verfahren gemäß einer der Ausführungsformen 48 bis 50, wobei die Mischung (M1) 1,3-Propandiol und 1,4-Butandiol in einem Verhältnis im Bereich von 3:1 bis 1:3 enthält.
52. Verfahren gemäß einer der Ausführungsformen 48 bis 51, wobei i die Mischung (M1) 1,6-Hexandiol enthält.
53. Verfahren gemäß einer der Ausführungsformen 48 bis 52, wobei das Polyesterpolyol (P1) ein Molekulargewicht Mw im Bereich von 750 bis 3000 g/Mol aufweist.
54. Verfahren gemäß einer der Ausführungsformen 48 bis 53, wobei der gemäß (ii) eingesetzte Kettenverlängerer ausgewählt ist aus der Gruppe bestehend aus aliphatischen und aromatischen Diolen mit einem Molekulargewicht von <500 g/mol.
55. Verfahren gemäß einer der Ausführungsformen 48 bis 54, wobei das Polyisocyanat ein aliphatisches oder aromatisches Diisocyanat ist.
56. Verfahren gemäß einer der Ausführungsformen 48 bis 55, wobei das Polyisocyanat ausgewählt ist aus der Gruppe bestehend aus Methylendiphenyldiisocyanat (MDI), 2,4- und/oder 2,6-Toluylendiisocyanat (TDI), Hexamethylen-1,6-diisocyanat (HDI), 4,4'-, 2,4'- und/oder 2,2'-Methylendicyclohexyldiisocyanat (H12MDI) und Isophorondiisocyanat (IPDI).
57. Verwendung eines thermoplastischen Polyurethans gemäß einer der Ausführungsformen 1 bis 14 oder eines thermoplastischen Polyurethans erhältlich oder erhalten nach einem Verfahren gemäß einer der Ausführungsformen 48 oder 50 bis 56 zur Herstellung von Extrusionsprodukten, Filmen und Formkörpern.
58. Verwendung gemäß Ausführungsform 57, wobei das Extrusionsprodukt, der Film oder die Folie mit Füllstoffen verstärkt ist.
59. Verwendung eines thermoplastischen Polyurethans gemäß einer der Ausführungsformen 34 bis 47 oder eines thermoplastischen Polyurethans erhältlich oder erhalten nach einem Verfahren gemäß einer der Ausführungsformen 48 oder 50 bis 56 zur Herstellung von Polymer-Zusammensetzungen.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Einsatzstoffe

Folgende Einsatzstoffe wurden eingesetzt:
- Polyol 1:: Polyesterpolyol mit einer OH- Zahl von 45,4 und ausschließlich primären OH-Gruppen (basierend auf 1,3-Propandiol und 1,4-Butandiol (Verhältnis 1:1) und Adipinsäure, Funktionalität: 2)
- Polyol 2:: Polyesterpolyol mit einer OH- Zahl von 56,6 und ausschließlich primären OH-Gruppen (basierend auf 1,3-Propandiol und 1,4-Butandiol (Verhältnis 1:3) und Adipinsäure, Funktionalität: 2)
- Polyol 3:: Polyesterpolyol mit einer OH- Zahl von 44,0 und ausschließlich primären OH-Gruppen (basierend auf 1,3-Propandiol und 1,4-Butandiol (Verhältnis 3:1) und Adipinsäure, Funktionalität: 2)
- Polyol 4:: Polyesterpolyol mit einer OH- Zahl von 45,1 und ausschließlich primären OH-Gruppen (basierend auf 1,3-Propandiol und 1,6-Hexandiol (Verhältnis 1:1) und Adipinsäure, Funktionalität: 2)
- Polyol 5:: Polyesterpolyol mit einer OH- Zahl von 43,3 und ausschließlich primären OH-Gruppen (basierend auf 1,3-Propandiol und Adipinsäure, Funktionalität: 2)
- Polyol 6:: Polyesterpolyol mit einer OH- Zahl von 45,2 und ausschließlich primären OH-Gruppen (basierend auf 1,4-Butandiol und Adipinsäure, Funktionalität: 2)

| | |
|---|---|
| Diisocyanat 1: | aromatisches Isocyanat (4,4' Methylendiphenyldiisocyanat) |
| KV 1: | 1,4-Butandiol |
| Stabilisator 1: | Polymeres Carbodiimid |
| Katalysatoren: | Titan(IV) butoxid (TTB), CAS: 5593-70-4 Zinn(II) 2-ethylhexanoat (SDO), CAS: 301-10-0 |

### 2. Methoden:

### 2.1 Viskositätsbestimmung:

Die Viskosität der Polyole wurde, wenn nicht anders angegeben, bei 25 °C gemäß DIN EN ISO 3219 (1994) mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt.

### 2.2 Messung der Hydroxylzahl:

Die Hydroxylzahlen wurden nach der Phthalsäureanhydrid-Methode DIN 53240 (1971-12) bestimmt und in mg KOH/g angegeben.

### 2.3 Messung der Säurezahl:

Die Säurezahl wurde nach DIN EN 1241 (1998-05) bestimmt und ist in mg KOH/g angegeben.

### 3. Herstellung der Polyole

### 3.1 Beispiel 1 (ADS/P1,3/B1,4 (1:1), MG:2500) - Polyol 1

In einen 4l Rundhalskolben versehen mit Thermometer, Stickstoffeinleitung, Heizpilz, Destillationskolonne und Rührer werden 1828,09 g Adipinsäure, 608,72 g 1,4 Butandiol, 514,02 g 1,3 Propandiol, 5 ppm SDO und 1 ppm TTB vorgelegt und auf 120 °C erwärmt. Nachdem der Ansatz klar wird, wird die Temperatur erst auf 150°C und dann schrittweise auf 240°C erhöht und mehrere Stunden bei 240°C das Wasser abdestilliert. Nachdem 90 % des berechneten Kondensationswassers abgetrennt ist wird der Druck in der Apparatur auf 60 mbar reduziert. Das entstehende Kondensationswasser wird kontinuierlich abdestilliert bis eine Säurezahl kleiner 1 mg KOH/g erreicht ist. Die Reaktionszeit betrug insgesamt ca. 18 h.

Es wird eine Polyester Polyol erhalten mit einer Hydroxylzahl von 45,4 mg KOH/g, einer Säurezahl von 0,79 mg KOH/g und einer Viskosität von 1423 mPas bei 75 °C.

### 3.2 Beispiel 2 (ADS/P1,3/B1,4 (1:3), MG: 2000) - Polyol 2

In einen 4l Rundhalskolben versehen mit Thermometer, Stickstoffeinleitung, Heizpilz, Destillationskolonne und Rührer werden 1792,91 g Adipinsäure, 914,48 g 1,4 Butandiol, 257,4 g 1,3 Propandiol, 5 ppm SDO und 1 ppm TTB vorgelegt und auf 120 °C erwärmt. Nachdem der Ansatz klar wird, wird die Temperatur erst auf 150°C und dann schrittweise auf 240°C erhöht und mehrere Stunden bei 240°C das Wasser abdestilliert. Nachdem 90 % des berechneten Kondensationswassers ab-getrennt ist wird der Druck in der Apparatur auf 60 mbar reduziert. Das entstehen-de Kondensationswasser wird kontinuierlich abdestilliert bis eine Säurezahl kleiner 1 mg KOH/g erreicht ist. Die Reaktionszeit betrug insgesamt ca. 20 h.

Es wird eine Polyester Polyol erhalten mit einer Hydroxylzahl von 56,6 mg KOH/g, einer Säurezahl von 0,4 mg KOH/g und einer Viskosität von 882 mPas bei 75 °C.

### 3.3 Beispiel 3 (ADS/P1,3/B1,4 (3:1), MG:2500) - Polyol 3

In einen 4l Rundhalskolben versehen mit Thermometer, Stickstoffeinleitung, Heizpilz, Destillationskolonne und Rührer werden 1864,56 g Adipinsäure, 309,98 g 1,4 Butandiol, 785,28 g 1,3 Propandiol, 5 ppm SDO und 1 ppm TTB vorgelegt und auf 120 °C erwärmt. Nachdem der Ansatz klar wird, wird die Temperatur erst auf 150°C und dann schrittweise auf 240°C erhöht und mehrere Stunden bei 240°C das Wasser abdestilliert. Nachdem 90 % des berechneten Kondensationswassers abgetrennt ist wird der Druck in der Apparatur auf 60 mbar reduziert. Das entstehende Kondensationswasser wird kontinuierlich abdestilliert bis eine Säurezahl kleiner 1 mg KOH/g erreicht ist. Die Reaktionszeit betrug insgesamt ca. 17 h.

Es wird eine Polyester Polyol erhalten mit einer Hydroxylzahl von 44,0 mg KOH/g, einer Säurezahl von 0,86 mg KOH/g und einer Viskosität von 1325 mPas bei 75 °C.

### 3.4 Beispiel 4 (ADS/P13/H16 (1:1), Mw 2500) - Polyol 4

In einen 4l Rundhalskolben versehen mit Thermometer, Stickstoffeinleitung, Heizpilz, Destillationskolonne und Rührer werden 1694,43 g Adipinsäure, 744,21 g 1,6-Hexandiol, 479,22 g 1,3-Propandiol, 5 ppm SDO und 1 ppm TTB vorgelegt und auf 120 °C erwärmt. Nachdem der Ansatz klar wird, wird die Temperatur erst auf 150°C und dann schrittweise auf 240°C erhöht und mehrere Stunden bei 240°C das Wasser abdestilliert. Nachdem 90 % des berechneten Kondensationswassers abgetrennt ist wird der Druck in der Apparatur auf 60 mbar reduziert. Das entstehende Kondensationswasser wird kontinuierlich abdestilliert bis eine Säurezahl kleiner 1 mg KOH/g erreicht ist. Die Reaktionszeit betrug insgesamt ca. 21 h.

Es wird eine Polyester Polyol erhalten mit einer Hydroxylzahl von 45,1 mg KOH/g, einer Säurezahl von 0,61 mg KOH/g und einer Viskosität von 1065 mPas bei 75 °C.

### 3.5 Beispiel 5 (ADS/P1,3, MG:2500) - Polyol 5 (Vergleichsbeispiel)

In einen 4l Rundhalskolben versehen mit Thermometer, Stickstoffeinleitung, Heizpilz, Destillationskolonne und Rührer werden 1902,45 g Adipinsäure und 1066,75 g 1,3 Propandiol vorgelegt und auf 120 °C erwärmt. Nachdem die Säure vollständig aufgeschmolzen ist wird die Temperatur erst auf 150°C und dann schrittweise auf 240°C erhöht und mehrere Stunden bei 240°C das Wasser abdestilliert. Nachdem 90 % des berechneten Kondensationswassers abgetrennt ist wird der Ansatz auf 180°C abgekühlt und 5 ppm SDO und 1 ppm TTB hinzugegeben. Anschließend wird erneut auf 240°C aufgeheizt und der Druck in der Apparatur auf 60 mbar reduziert. Das entstehende Kondensationswasser wird kontinuierlich abdestilliert bis eine Säurezahl kleiner 1 mg KOH/g erreicht ist. Die Reaktionszeit betrug insgesamt ca. 22 h.

Es wird eine Polyester Polyol erhalten mit einer Hydroxylzahl von 43,3 mg KOH/g, einer Säurezahl von 0,86 mg KOH/g und einer Viskosität von 1465 mPas bei 75 °C.

### 3.6 Beispiel 6 (ADS/B14, MG:2500) - Polyol 6 (Vergleichsbeispiel)

In einen 4l Rundhalskolben versehen mit Thermometer, Stickstoffeinleitung, Heizpilz, Destillationskolonne und Rührer werden 1758,1 g Adipinsäure, 1210,8 g 1,4 Butandiol, 1 ppm TTB und 5 ppm SDO vorgelegt und auf 120 °C erwärmt. Nachdem die Säure vollständig aufgeschmolzen ist wird die Temperatur erst auf 150°C und dann schrittweise auf 240°C erhöht und mehrere Stunden bei 240°C das Wasser abdestilliert. Nachdem 90 % des berechneten Kondensationswassers abgetrennt ist wird der Druck in der Apparatur auf 60 mbar reduziert. Das entstehende Kondensationswasser wird kontinuierlich abdestilliert bis eine Säurezahl kleiner 1 mg KOH/g erreicht ist. Die Reaktionszeit betrug insgesamt ca. 15 h.

Es wird eine Polyester Polyol erhalten mit einer Hydroxylzahl von 45,2 mg KOH/g, einer Säurezahl von 0,6 mg KOH/g und einer Viskosität von 1080 mPas bei 75 °C.

### 4. Herstellbeispiele für TPU Synthese:

Ein thermoplastisches Polyurethan (TPU) wurde aus Diisocyanat, Kettenverlängerer (KV), Stabilisator und Polyol entsprechend den Rezepturen aus Tabelle 1 unter Rühren in einem Reaktionsgefäß synthetisiert. Die Starttemperatur betrug 80 °C. Nach Erreichen einer Reaktionstemperatur von 110 °C wurde die Lösung auf eine auf 125 °C temperierte Heizplatte ausgegossen und die erhaltende TPU-Platte nach Temperung (15 h, 80 °C) granuliert.

**Tabelle 1: Zusammensetzung der TPUs**

| | Beispiel 1 | Beispiel 2 | Beispiel 3 | Beispiel 4 | Vergleichsbeispiel 1 | Vergleichsbeispiel 2 |
|---|---|---|---|---|---|---|
| Polyol 1 [g] | 950 | | | | | |
| Polyol 2 [g] | | 950 | | | | |
| Polyol 3 [g] | | | 950 | | | |
| Polyol 4 [g] | | | | 950 | | |
| Polyol 5 [g] | | | | | 950 | |
| Polyol 6 [g] | | | | | | 950 |
| Diisocyanat 1 [g] | 526,27 | 559,36 | 522,01 | 525,32 | 517,40 | 527,25 |
| KV 1 [g] | 155,46 | 158,95 | 155,01 | 155,36 | 154,52 | 155,40 |
| Stabilisator 1 [g] | 7,60 | 7,60 | 7,60 | 7,60 | 7,60 | 7,60 |
| Kennzahl | 990 | 990 | 990 | 990 | 990 | 990 |

### 5. Mechanische Eigenschaften

Die mechanischen Werte von den erhaltenen thermoplastischen Polyurethanen sind in der Tabelle 2 aufgelistet. Dabei wurde die Mechanik an Spritzgussplatten, die 20 h bei 100 °C getempert waren, bei Raumtemperatur nach folgenden Methoden bestimmt:

| | |
|---|---|
| Shorehärte | DIN ISO 7619-1:2012 nach einer Eindruckzeit von 3 s bestimmt |
| Zugfestigkeit | DIN 53 504 gemessen an einem S2 Prüfkörper, |
| Reißdehnung | DIN 53504, |
| Weiterreißfestigkeit | DIN 53 515, |
| Abrieb | DIN 53 516 |

**Tabelle 2: Mechanische Werte der TPUs**

| | Beispiel 1 | Beispiel 2 | Beispiel 3 | Beispiel 4 | Vergleichsbeispiel 1 | Vergleichsbeispiel 2 |
|---|---|---|---|---|---|---|
| Shorehärte | 91A | 93A | 92A | 91A | 92A | 92A |
| Zugfestigkeit | 47 MPa | 49 MPa | 44 MPa | 42A | 43 MPa | 45 MPa |
| Reißdehnung | 600% | 600% | 620% | 590% | 610% | 580% |
| Weiterreißfestigkeit | 89 kN/m | 93 kN/m | 83 kN/m | 87kN/m | 79 kN/m | 94 kN/m |
| Abrieb | 52 mm³ | 52 mm³ | 59 mm³ | 47 mm³ | 96 mm³ | 51 mm³ |

### 6. Ausblühverhalten

Das Ausblühverhalten wurde an ungetemperten Spritzgussplatten anhand eines Wechselklimatestes und bei Lagerung unter Normklima analysiert. Für den Wechselklimatest wurden die Probenkörper über 2 Wochen jeweils im Wechsel von 12 Stunden bei -18 °C und bei Raumtemperatur gelagert. Die Ergebnisse sind in Tabelle 3 zusammengefasst.

**Tabelle 3: Ergebnisse des Ausblühverhaltens der TPUs**

| | Beispiel 1 | Beispiel 2 | Beispiel 3 | Beispiel 4 | Vergleichsbeispiel 1 | Vergleichsbeispiel 2 |
|---|---|---|---|---|---|---|
| Lagerung bei Normklima nach 4 Monaten | 0 | 0 | 0 | 0 | 0 | 2 |
| Wechselklimatest | 0 | 0 | 0 | 0 | 1 | 2 |

| | | | | | | |
|---|---|---|---|---|---|---|
| Erklärung: 0=kein Belag ; 1 = Belag ; 2 = starker Belag | | | | | | |

### Zitierte Literatur:

US 5695884
US 2006/0141883 A1
US 2006/0121812 A1
WO 00/51660 A1
WO 2010/107562 A1
Kunststoffhandbuch, Band VII, herausgegeben von Vieweg und Höchtlen, Carl Hanser Verlag, München 1966 (S103-113)
EP 0 922 552 A1
WO 2006/082183 A1
WO2014/198779 A1
WO 2007/082838 A1
WO 94/20568 A1

## Patentansprüche

1. Thermoplastisches Polyurethan, erhältlich oder erhalten durch Umsetzung von mindestens den Komponenten (i) bis (iii):
(i) eine Polyisocyanatzusammensetzung enthaltend mindestens ein Polyisocyanat,
(ii) mindestens ein Kettenverlängerer, und
(iii) mindestens eine Polyolzusammensetzung, wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen.

2. Thermoplastisches Polyurethan gemäß Anspruch 1, wobei das Diol (D1) ausgewählt ist aus der Gruppe bestehend aus Ethylenglykol, 1,4-Butandiol und 1,6-Hexandiol.

3. Thermoplastisches Polyurethan gemäß Anspruch 1 oder 2, wobei das Diol (D1) 1,4-Butandiol ist.

4. Thermoplastisches Polyurethan gemäß einem der Ansprüche 1 bis 3, wobei die aliphatische Dicarbonsäure Adipinsäure ist.

5. Thermoplastisches Polyurethan gemäß einem der Ansprüche 1 bis 4, wobei die Mischung (M1) 1,3-Propandiol und das Diol (D1) in einem Verhältnis im Bereich von 3:1 bis 1:3 enthält.

6. Thermoplastisches Polyurethan gemäß einem der Ansprüche 1 bis 5, wobei die Mischung (M1) ein weiteres Diol enthält.

7. Thermoplastisches Polyurethan gemäß einem der Ansprüche 1 bis 6, wobei das Polyesterpolyol (P1) ein Molekulargewicht Mw im Bereich von 750 bis 3000 g/Mol aufweist.

8. Thermoplastisches Polyurethan gemäß einem der Ansprüche 1 bis 7, wobei der gemäß (ii) eingesetzte Kettenverlängerer ausgewählt ist aus der Gruppe bestehend aus aliphatischen und aromatischen Diolen mit einem Molekulargewicht von <500 g/mol.

9. Thermoplastisches Polyurethan gemäß einem der Ansprüche 1 bis 8, wobei das Polyisocyanat ein aliphatisches oder aromatisches Diisocyanat ist.

10. Thermoplastisches Polyurethan gemäß einem der Ansprüche 1 bis 9, wobei das Polyisocyanat ausgewählt ist aus der Gruppe bestehend aus Methylendiphenyldiisocyanat (MDI), 2,4- und 2,6-Toluylendiisocyanat (TDI), Hexamethylen-1,6-diisocyanat (HDI), 4,4'-, 2,4'- und 2,2'-Methylendicyclohexyldiisocyanat (H12MDI) und Isophorondiisocyanat (IPDI).

11. Verfahren zur Herstellung eines thermoplastischen Polyurethans, umfassend die Umsetzung von mindestens den Komponenten (i) bis (iii):
(i) eine Polyisocyanatzusammensetzung enthaltend mindestens ein Polyisocyanat,
(ii) mindestens ein Kettenverlängerer, und
(iii) mindestens eine Polyolzusammensetzung, wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen.

12. Verfahren zur Herstellung eines Formkörpers (FK) umfassend die folgenden Schritte:
(a) Herstellung eines thermoplastischen Polyurethans umfassend die Umsetzung von mindestens den Komponenten (i) bis (iii):
(i) eine Polyisocyanatzusammensetzung enthaltend mindestens ein Polyisocyanat,
(ii) mindestens ein Kettenverlängerer, und
(iii) mindestens eine Polyolzusammensetzung,
wobei die Polyolzusammensetzung mindestens ein Polyesterpolyol (P1) enthält, das erhältlich ist durch Umsetzung einer aliphatischen Dicarbonsäure mit 2 bis 12 C-Atomen und einer Mischung (M1) enthaltend 1,3-Propandiol und ein weiteres Diol (D1) mit 2 bis 12 C-Atomen;
(b) Herstellung eines Formkörpers (FK) aus dem thermoplastischen Polyurethan.

13. Verwendung eines thermoplastischen Polyurethans gemäß einem der Ansprüche 1 bis 10 oder eines thermoplastischen Polyurethans erhältlich oder erhalten nach einem Verfahren gemäß Anspruch 11 zur Herstellung von Extrusionsprodukten, Filmen und Formkörpern.

14. Verwendung gemäß Anspruch 13, wobei das Extrusionsprodukt, der Film oder die Folie mit Füllstoffen verstärkt ist.

15. Verwendung eines thermoplastischen Polyurethans gemäß einem der Ansprüche 1 bis 10 oder eines thermoplastischen Polyurethans erhältlich oder erhalten nach einem Verfahren gemäß Anspruch 11 zur Herstellung einer Polymer-Zusammensetzung.

## Claims

1. A thermoplastic polyurethane obtainable or obtained by reacting at least the components (i) to (iii):
(i) a polyisocyanate composition comprising at least one polyisocyanate,
(ii) at least one chain extender, and
(iii) at least one polyol composition, wherein the polyol composition comprises at least one polyester polyol (P1) which is obtainable by reacting an aliphatic dicarboxylic acid having 2 to 12 carbon atoms and a mixture (M1) comprising propane-1,3-diol and a further diol (D1) having 2 to 12 carbon atoms.

2. The thermoplastic polyurethane according to claim 1, wherein the diol (D1) is selected from the group consisting of ethylene glycol, butane-1,4-diol and hexane-1,6-diol.

3. The thermoplastic polyurethane according to claim 1 or 2, wherein the diol (D1) is butane-1,4-diol.

4. The thermoplastic polyurethane according to any of claims 1 to 3, wherein the aliphatic dicarboxylic acid is adipic acid.

5. The thermoplastic polyurethane according to any of claims 1 to 4, wherein the mixture (M1) comprises propane-1,3-diol and the diol (D1) in a ratio in the range from 3:1 to 1:3.

6. The thermoplastic polyurethane according to any of claims 1 to 5, wherein the mixture (M1) comprises a further diol.

7. The thermoplastic polyurethane according to any of claims 1 to 6, wherein the polyester polyol (P1) has a molecular weight Mw in the range from 750 to 3000 g/mol.

8. The thermoplastic polyurethane according to any of claims 1 to 7, wherein the chain extender used in (ii) is selected from the group consisting of aliphatic and aromatic diols having a molecular weight of <500 g/mol.

9. The thermoplastic polyurethane according to any of claims 1 to 8, wherein the polyisocyanate is an aliphatic or aromatic diisocyanate.

10. The thermoplastic polyurethane according to any of claims 1 to 9, wherein the polyisocyanate is selected from the group consisting of methylene diphenyl diisocyanate (MDI), tolylene 2,4- and 2,6-diisocyanate (TDI), hexamethylene 1,6-diisocyanate (HDI), methylene dicyclohexyl 4,4'-, 2,4'- and 2,2'-diisocyanate (H12MDI) and isophorone diisocyanate (IPDI).

11. A process for preparing a thermoplastic polyurethane comprising the reaction of at least the components (i) to (iii):
(i) a polyisocyanate composition comprising at least one polyisocyanate,
(ii) at least one chain extender, and
(iii) at least one polyol composition, wherein the polyol composition comprises at least one polyester polyol (P1) which is obtainable by reacting an aliphatic dicarboxylic acid having 2 to 12 carbon atoms and a mixture (M1) comprising propane-1,3-diol and a further diol (D1) having 2 to 12 carbon atoms.

12. A process for producing a shaped body (SB) comprising the following steps:
(a) preparing a thermoplastic polyurethane, comprising the reaction of at least the components (i) to (iii):
(i) a polyisocyanate composition comprising at least one polyisocyanate,
(ii) at least one chain extender, and
(iii) at least one polyol composition,
wherein the polyol composition comprises at least one polyester polyol (P1) which is obtainable by reacting an aliphatic dicarboxylic acid having 2 to 12 carbon atoms and a mixture (M1) comprising propane-1,3-diol and a further diol (D1) having 2 to 12 carbon atoms;
(b) producing a shaped body (SB) from the thermoplastic poly urethane.

13. The use of a thermoplastic polyurethane according to any of claims 1 to 10 or of a thermoplastic polyurethane obtainable or obtained by a process according to claim 11 for the production of extrusion products, films and shaped bodies.

14. The use according to claim 13, wherein the extrusion product, the film or the sheet is reinforced with fillers.

15. The use of a thermoplastic polyurethane according to any of claims 1 to 10 or of a thermoplastic polyurethane obtainable or obtained by a process according to claim 11 for the production of a polymer composition.

## Revendications

1. Polyuréthane thermoplastique, obtenu ou qui peut être obtenu par transformation au moins des composants (i) à (iii) :
(i) une composition de polyisocyanate contenant au moins un polyisocyanate,
(ii) au moins un extenseur de chaînes, et
(iii) au moins une composition de polyol,
la composition de polyol contenant au moins un polyesterpolyol (P1) qui peut être obtenu par transformation d'un acide dicarboxylique aliphatique comportant 2 à 12 atomes de C et d'un mélange (M1) contenant du 1,3-propanediol et un autre diol (D1) comportant 2 à 12 atomes de C.

2. Polyuréthane thermoplastique selon la revendication 1, le diol (D1) étant choisi dans le groupe constitué par l'éthylèneglycol, le 1,4-butanediol et le 1,6-hexanediol.

3. Polyuréthane thermoplastique selon la revendication 1 ou 2, le diol (D1) étant le 1,4-butanediol.

4. Polyuréthane thermoplastique selon l'une quelconque des revendications 1 à 3, l'acide dicarboxylique aliphatique étant l'acide adipique.

5. Polyuréthane thermoplastique selon l'une quelconque des revendications 1 à 4, le mélange (M1) contenant du 1,3-propanediol et le diol (D1) en un rapport dans la plage de 3 : 1 à 1 : 3.

6. Polyuréthane thermoplastique selon l'une quelconque des revendications 1 à 5, le mélange (M1) contenant un autre diol.

7. Polyuréthane thermoplastique selon l'une quelconque des revendications 1 à 6, le polyesterpolyol (P1) présentant un poids moléculaire Mw dans la plage de 750 à 3 000 g/mole.

8. Polyuréthane thermoplastique selon l'une quelconque des revendications 1 à 7, l'extenseur de chaînes utilisé en (ii) étant choisi dans le groupe constitué par des diols aliphatiques et aromatiques dotés d'un poids moléculaire de < 500 g/mole.

9. Polyuréthane thermoplastique selon l'une quelconque des revendications 1 à 8, le polyisocyanate étant un diisocyanate aliphatique ou aromatique.

10. Polyuréthane thermoplastique selon l'une quelconque des revendications 1 à 9, le polyisocyanate étant choisi dans le groupe constitué par un diisocyanate de diphénylméthylène (MDI), le 2,4-diisocyanate de toluylène et le 2,6-diisocyanate de toluylène (TDI), le 1,6-diisocyanate d'hexaméthylène (HDI), le 4,4'-diisocyanate de dicyclohexylméthylène, le 2,4'-diisocyanate de dicyclohexylméthylène et le 2,2'-diisocyanate de dicyclohexylméthylène (H12MDI) et le diisocyanate d'isophorone (IPDI).

11. Procédé pour la préparation d'un polyuréthane thermoplastique, comprenant la transformation au moins des composants (i) à (iii) :
(i) une composition de polyisocyanate contenant au moins un polyisocyanate,
(ii) au moins un extenseur de chaînes, et
(iii) au moins une composition de polyol,
la composition de polyol contenant au moins un polyesterpolyol (P1) qui peut être obtenu par transformation d'un acide dicarboxylique aliphatique comportant 2 à 12 atomes de C et d'un mélange (M1) contenant du 1,3-propanediol et un autre diol (D1) comportant 2 à 12 atomes de C.

12. Procédé pour la préparation d'un corps moulé (FK) comprenant les étapes suivantes :
(a) préparation d'un polyuréthane thermoplastique comprenant la transformation au moins des composants (i) à (iii) :
(i) une composition de polyisocyanate contenant au moins un polyisocyanate,
(ii) au moins un extenseur de chaînes, et
(iii) au moins une composition de polyol,
la composition de polyol contenant au moins un polyesterpolyol (P1) qui peut être obtenu par transformation d'un acide dicarboxylique aliphatique comportant 2 à 12 atomes de C et d'un mélange (M1) contenant du 1,3-propanediol et un autre diol (D1) comportant 2 à 12 atomes de C ;
(b) préparation d'un corps moulé (FK) à partir du polyuréthane thermoplastique.

13. Utilisation d'un polyuréthane thermoplastique selon l'une quelconque des revendications 1 à 10 ou d'un polyuréthane thermoplastique obtenu ou qui peut être obtenu d'après un procédé selon la revendication 11 pour la préparation de produits d'extrusion, de films et de corps moulés.

14. Utilisation selon la revendication 13, le produit d'extrusion, le film ou la feuille étant renforcé(e) avec des charges.

15. Utilisation d'un polyuréthane thermoplastique selon l'une quelconque des revendications 1 à 10 ou d'un polyuréthane thermoplastique obtenu ou qui peut être obtenu d'après un procédé selon la revendication 11 pour la préparation d'une composition de polymère.
